# EUROPÄISCHE PATENTSCHRIFT

(11) **EP 1 298 613 B1**
(45) Veröffentlichungstag und Bekanntmachung des Hinweises auf die Patenterteilung: **24.02.2010**
(21) Anmeldenummer: 02018744.9
(22) Anmeldetag: 22.08.2002
(51) Int. Cl.: G06Q 20/00

(54) **Verfahren zum Abwickeln von Zahlungstransaktionen in einem Datennetz**
Method for conducting payment transactions in a data network
Méthode pour effectuer des transactions de paiement dans un réseau informatique

(30) Priorität: 27.09.2001 DE 10147651
(43) Veröffentlichungstag der Anmeldung: 02.04.2003
(73) Patentinhaber: Deutsche Telekom AG, 53113 Bonn (DE)
(72) Erfinder: Mennecke, Ralf, 69259 Wilhelmsfeld (DE); Schmuck, Klaus, Dipl.-Ing., 76189 Karlsruhe (DE)

(56) Entgegenhaltungen:
- WO-A-01/15045
- DE-A1- 10 023 251
- DE-A1- 19 716 068

## Beschreibung

Die Erfindung betrifft ein Verfahren zum Abwickeln von Zahlungstransaktionen in einem Datennetz gemäß der im Anspruch 1 angegebenen Art sowie eine Vorrichtung zur Durchführung des Verfahrens gemäß Anspruch 10.

Zur Abwicklung von Zahlungstransaktionen in dem weltweiten Datennetz Internet werden immer noch überwiegend die klassischen bargeldlosen Zahlungsverfahren wie Kreditkarte, Rechnung, Lastschrift oder Nachnahme eingesetzt. Die Kreditkarte bietet hierbei den Vorteil, dass ein Verkäufer von Waren oder Dienstleistungen relativ sicher sein Geld bekommt. Allerdings trägt der Käufer ein nicht zu unterschätzendes Risiko, da seine Kreditkartendaten im Internet ausgespäht und missbräuchlich von Dritten verwendet werden können. Obwohl die Kreditkartendaten in der Regel zwischen dem Computer des Käufers und dem Computer des Verkäufers bzw. Händlers über eine gesicherte, d.h. verschlüsselte Verbindung nach dem SSL (Secure Sockets Layer)-Standard ausgetauscht werden, scheuen sich noch immer viele Internetnutzer, diesen Zahlungsweg zu beschreiten.

Zudem ist die Bezahlung von Kleinbeträgen mittels Kreditkarte häufig nicht möglich, da es für den Händler aufgrund hoher Provisionen für das Kreditkartenunternehmen unattraktiv ist. Daher wurden sogenannte Micropayment-Systeme für die Bezahlung von Klein- und Kleinstbeträgen über das Internet entwickelt.

Unter Micropayment-Systemen haben sich mittlerweile im wesentlichen drei unterschiedliche Verfahren durchgesetzt:
1. Telefonbasierte Systeme nutzen den Festnetz- oder Mobiltelefon-Anschluss eines Kunden zum Identifizieren und Abbuchen. Oftmals erfolgt die Zahlung auch über teure Premium-Telefonnnummern wie 0190-Nummern, die der Kunde zum Bezahlen anrufen muss. Ein derartiges System ist beispielsweise unter dem Namen "Paybox" bekannt.
2. Guthabenbasierte Systeme setzen im Prinzip auf bestehende Konten eines Käufers auf, beispielsweise seinem Girokonto. Bekanntestes Beispiel ist wohl die Geldkarte, die über das Girokonto eines Käufers aufgeladen wird.
3. Schließlich gibt es die sogenannten Trusted-Third-Party-Systeme, bei denen ein vertrauenswürdiger Dritter die Zahlungsabwicklung übernimmt. Hierzu sammelt der Dritte Zahlungsbeträge eines Kunden über einen bestimmten Zeitraum und bucht diese entweder von der Kreditkarte oder dem Girokonto des Kunden ab.

Nachteilig an den bekannten Systemen ist die fehlende Anonymität des Käufers, d. h. der Käufer ist grundsätzlich identifizierbar, teilweise muss er es sogar sein. Damit ist prinzipiell die Möglichkeit eröffnet, das Kaufverhalten eines Käufers nachzuvollziehen, also private Details des Kunden zu erfahren. Unter dem Stichwort "gläserner Kunde" wird dieses Problem mittlerweile in der Öffentlichkeit diskutiert.

Wünschenswert aus Verbraucher- bzw. Kundensicht wäre daher zum einen eine Anonymität, wie sie der bisherige Bargeldzahlungsverkehr bietet, und zum anderen eine einfache, insbesondere technisch einfache Zahlungsmöglichkeit für Datennetze wie dem Internet.

Ein gattungsgemäßes, sämtliche Merkmale des Oberbegriffs des Anspruches 1 umfassendes Verfahren zum Abwickeln von Zahlungstransaktionen in einem Datennetz, welches eine ein dem Bargeldverkehr vergleichbare Anonymität bietet, ist in der WO 01 15 045 A1 offenbart.

Der Erfindung liegt die Aufgabe zugrunde, ein Verfahren zum Abwickeln von Zahlungstransaktion in einem Datennetz sowie eine Vorrichtung zur Durchführung des Verfahrens vorzuschlagen, die Anonymität für einen Käufer bzw. Kunden gewährleisten und vor allem einfach handhabbar sind.

Diese Aufgabe wird für das Verfahren durch die Merkmale des Anspruches 1 und für die Vorrichtung durch den Anspruch 10 gelöst.

Der Erfindung liegt die Idee zugrunde, anonyme Nummerkonten einzurichten, auf die im Prinzip von einem beliebigen Rechner in einem Datennetz zugegriffen werden kann. Die "Eröffnung" eines derartigen Nummerkontos erfolgt anonym wie im folgenden noch erläutert wird. Die Abwicklung von Zahlungstransaktionen wird zentral von einem Verwaltungssystem durchgeführt, ohne dass dieses Informationen über den Kunden, wie Name, Adresse oder dergleichen Angaben erhält. Händler, die ihre Waren und/oder Dienstleistungen in dem Datennetz anbieten, sollen keine aufwendige Technologie bereit stellen müssen. Das erfindungsgemäße Verfahren soll zudem in herkömmliche Datennetze wie vorzugsweise dem Internet einfach integrierbar sein.

Um die Anonymität zu ermöglichen, wird im wesentlichen das aus dem Telekommunikationsbereich bekannte und weit verbreitete Prepaid-Zahlungssystem verwendet. Beispielsweise kann man eine vorbezahlte Telefonkarte ohne Angabe persönlicher Daten an Verkaufsstellen erwerben und damit von jedem Fernsprecher durch Anwahl einer vorgegebenen Telefonnummer und.Eingabe eines Kodes, der auf der Telefonkarte aufgedruckt ist, das Guthaben auf der Telefonkarte abtelefonieren.

Um nun ein auf dieser Idee basierendes Verfahren für das Bezahlen in einem Datennetz zu ermöglichen, sind im wesentlichen zwei Komponenten erforderlich. Zum einen ein Verwaltungssystem für anonyme Nummernkonten, denen jeweils mindestens ein Zugangskode zugeordnet ist. Diese Nummernkonten sind mit vorgegebenen Guthaben gefüllt. Zum anderen einen Träger für mindestens einen Zugangskode, beispielsweise eine Art Telefonkarte oder ein vergleichbares Medium. Ein Kunde kann in einer Verkaufsstelle den Träger erwerben. Er zahlt dafür den dem Guthaben auf dem Nummernkonto entsprechenden Geldbetrag. Zugriff zu seinem Nummernkonto kann der Kunde nun durch den mindestens einen Zugangskode enthaltenden Träger erhalten.

Händler können ihren Kunden die Bezahlung über das erfindungsgemäße Verfahren dadurch ermöglichen, dass sie einen Vertrag mit dem Betreiber des Verfahrens, genauer gesagt des Verwaltungssystems, abschließen. Hierdurch werden sie in eine Datenbank mit berechtigten Händlern aufgenommen.

Kunden benötigen lediglich einen Zugang zum Datennetz und ein Netzzugriffsprogramm, wie beispielsweise einen Browser im Falle des Internets als Datennetz. Um beispielsweise das Internet zu Shoppingzwecken nutzen zu können, wird beim Kunden bzw. Käufer ein herkömmlicher Internet-Browser vorausgesetzt. Ein besonderer Hersteller ist nicht notwendig, da die Kommunikation allein auf dem Secure Hyper Text Transfer Protocol (https) basiert und die beim Käufer eingeblendeten Fenster die Hyper Text Markup Language (html) Sprache nutzen.

Um den Bezahlvorgang für den Käufer einfach und sicher und ohne Administration seiner Browser-Einstellungen zu realisieren, sollte auf die Verwendung von Cookies bei der Abwicklung der Zahlungstransaktion zwischen dem Käufer und dem Verwaltungssystem verzichtet werden. Jedoch können einige Erleichterungen zur Eingabe u.a. mit Skriptsprachen programmiert sein. Bei der Erfindung ist es auch nicht erforderlich eine zusätzlich Software auf dem Kunden-Client, beispielsweise dem PersonalComputer eines Kunden, zu installieren, um erfindungsgemäße Verfahren nutzen zu können.

Durch die zentrale Abwicklung von Zahlungstransaktionen, die im wesentlichen über das Verwaltungssystem erfolgt, wird eine sichere Zahlungstransaktion gewährleistet.

Konkret betrifft die Erfindung ein Verfahren zum Abwickeln von Zahlungstransaktionen in einem Datennetz, mit einem Verwaltungssystem, das mindestens einen Datenbank-Server mit mindestens einer Datenbank mit anonymen Nummernkonten, denen jeweils mindestens ein Zugangskode zugeordnet ist, und mindestens einer Datenbank mit Händlerinformationen aufweist. Eine Zahlungstransaktion wird wie folgt durchgeführt:
a) über einen Kunden-Client wird eine Ware und/oder Dienstleistung auf einem Händler-Server ausgewählt;
b) der Kunden-Client übermittelt dem Verwaltungssystem einen Transaktionsdatensatz, der einen Zahlbetrag und einen Händler-Identitätskode aufweist;
c) das Verwaltungssystem prüft nach Empfangen des Transaktionsdatensatzes, ob der Händler-Identitätskode in der Datenbank mit Händlerinformationen gespeichert ist;
d) das Verwaltungssystem übermittelt eine Anfrage an den Händler-Server zum Bestätigen der Zahlungstransaktion, falls der Händler-Identitätskode in der Datenbank mit Händlerinformationen enthalten ist;
e) schließlich bucht das Verwaltungssystem nach Bestätigung der Anfrage durch den Händler-Server mittels einer Authentifizierungsprozedur mit dem Kunden-Client von einem Nummernkonto den Zahlbetrag ab.

Die Authentifizierungsprozedur umfasst in einer konkreten Ausführungsform des Verfahrens folgende Schritte:
f) Übermitteln einer Anfrage zur Eingabe eines Zugangskodes zum Nummernkonto an den Kunden-Client;
g) Übermitteln des Zugangskodes an das Verwaltungssystem;
h) Anzeigen des Kontostands des Nummernkontos vor und nach dem Abwickeln der Zahlungstransaktion auf dem Kunden-Client;
i) Bestätigen oder Abbrechen der Zahlungstransaktionen über den Kunden-Client an das Verwaltungssystem.

Vorzugsweise werden innerhalb eines vorgegebenen Zeitraums alle Zahlungstransaktionen vom Verwaltungssystem gespeichert und in eine Datei übertragen. Die Datei wird daraufhin an mindestens einen Server eines Abrechnungssystems übertragen.

Das Abrechnungssystem kann dann die in der empfangenen Datei enthaltenen Zahlungstransaktionen aufbereiten und an mindestens einen Server eines Finanzsystem übertragen. Das Finanzsystem wiederum veranlasst Zahlungen an Händler gemäß den aufbereiteten Zahlungstransaktionen.

Vorzugsweise erfolgt die Abfrage des Kontostands eines Nummernkontos über einen Client, indem eine Anfrage an das Verwaltungssystem zum Anzeigen des Kontostands übermittelt wird und das Verwaltungssystem nach Eingabe des Zugangskodes zum Nummernkonto den Kontostand auf dem Client anzeigt.

In einer derzeit bevorzugten Ausgestaltung des Verfahrens wird eine Zahlungstransaktion von einem Kunden-Client durch eine Eingabe, insbesondere einem Mausklick, gestartet, wodurch eine Verbindung zu einem Applikations-Server des Verwaltungssystems aufgebaut wird. Der Applikations-Server erzeugt daraufhin eine eindeutige Kennung für die Zahlungstransaktion. Auf dem Kunden-Client wird ein Transaktionsdatensatz erzeugt und verschlüsselt an den Applikations-Server übertragen.

Hierbei kann der Transaktionsdatensatz mittels eines HTML-Formulars mit der GET- oder POST-Anforderung an den Applikations-Server übertragen werden. Dies bietet sich vor allem beim Internet als Datennetz an, dem bevorzugten Einsatzgebiet des erfindungsgemäßen Verfahrens. Vorzugsweise wertet der Applikations-Server die GET- oder POST-Anforderung aus, indem er überprüft, ob der übermittelte Transaktionsdatensatz einen Kopf und der Kopf ein bestimmtes Kopffeld aufweist.

Zudem kann der Applikations-Server den Transaktionsdatensatz nach Empfang auf Vollständigkeit überprüfen, indem er feststellt, ob alle Felder des Transaktionsdatensatzes Daten aufweisen.

Bei Vollständigkeit des Transaktionsdatensatzes wird vorzugsweise die Authentizität der Daten überprüft, indem eine verschlüsselte Verbindung zum Händler-Server aufgebaut und auf dem Applikations-Server ein Programm, insbesondere ein Java-Servlet, gestartet wird, welches einen Prüfergebnisdatensatz vom Händler-Server auswertet.

Das Programm kann vom Händler-Server als Prüfergebnisdatensatz ein HTML-Formular erhalten, das die dem Transaktionsdatensatz zugeordneten und auf dem Händler-Server gespeicherten Daten und ferner einen logischen Wert für die Authentizität aufweist.

Vorzugsweise sendet der Applikations-Server parallel zur Überprüfung der Authentizität eine Anfrage zur Eingabe des mindestens einen Zugangskodes zu einem Nummernkonto an den Kunden-Client.

Schließlich kann der Applikations-Server nach Erhalt des mindestens einen Zugangskodes und des Prüfergebnisdatensatzes den vom Kunden-Client empfangenen Transaktionsdatensatz mit dem Prüfergebnisdatensatz vergleichen und bei Gleichheit der Daten den mindestens einen Zugangskode anhand der mindestens einen Datenbank mit Nummerkonten überprüfen.

Eine Vorrichtung zur Durchführung des erfindungsgemäßen Verfahrens umfasst ein Verwaltungssystem, das mindestens einen Datenbank-Server mit mindestens einer Datenbank mit anonymen Nummernkonten, denen jeweils mindestens ein Zugangskode zugeordnet ist, und mindestens einer Datenbank mit Händlerinformationen aufweist.

Das Verwaltungssystem weist vorzugsweise mindestens einen Applikations-Server zum Abwickeln der Zahlungstransaktionen auf.

Um eine hohe Ausfallsicherheit der Vorrichtung zu gewährleisten, sind in einer bevorzugten Ausführungsform genau zwei Applikations-Server vorgesehen, die redundant arbeiten.

Der mindestens eine Applikations-Server kann über mindestens eine Firewall mit dem Datennetz, insbesondere dem Internet, verbunden sein. Hierdurch wird eine hohe Sicherheit erzielt, ohne die die Vorrichtung gegebenenfalls nur eine geringe Akzeptanz bei sicherheitsbedachten Kunden erreicht.

Das Verwaltungssystem ist vorzugsweise mit mindestens einem Server eines Abrechnungssystems zum Aufbereiten von Zahlungstransaktionen verbunden.

Das Abrechnungssystem kann wiederum mit mindestens einem Server eines Finanzsystems zum Veranlassen von Zahlungen gemäß aufbereiteten Zahlungstransaktionen verbunden sein.

Vorzugsweise sind Verwaltungssystem und/oder Abrechnungssystem und/oder Finanzsystem über ein Intranet miteinander verbunden.

In einer angedachten Ausbaustufe der Vorrichtung sind Verwaltungssystem und/oder Abrechnungssystem und/oder Finanzsystem räumlich nahe beieinander angeordnet sind, insbesondere in einem Gebäude untergebracht.

Schließlich kann das Verwaltungssystem mit einem Telefonie-Server für vorbezahlte Telefonate verbunden sein, wodurch die eingangs erwähnte Doppelfunktion - Bezahlen und Telefonieren - erzielt wird.

Die "MicroMoney-Karte" ist der Träger des Zugangkodes für Telekommunikation und e-Payment über ein prepaid erworbenes Guthaben. Der Zugangskode ist trägerunabhängig; man kann sich auch andere Formen der Träger vorstellen, wie z.B. einen Kugelschreiber oder Getränkeflaschen.

Mit der Erfindung erhält der Kunde also die Möglichkeit, Telekommunikationsleistungen, elektronische Bezahl-Funktion (e-Payment) sowie alle möglichen Leistungen online (durch eine Verbindung zu einer nummernführenden Stelle), mit einer mittels Prepaid erworbenes Guthaben anonym zu nutzen/bezahlen.

Die Telekommunikationsleistungen werden analog zu den heutigen Prepaid-Calling Cards, beispielsweise die T-Card der Telekom AG erbracht. Die Einwahl kann beispielsweise über eine kostenfrei 0800 Rufnummer erfolgen.

Beim e-Payment wird das erfindungsgemäße Verfahren zum Bezahlen von Klein- und Kleinstbeträgen für Produkte, Dienstleistungen und/oder Inhalten eingesetzt. Der Zugangskode dient zur Authentifizierung bei dem Verwaltungssystem. Zwei Karten werden benötigt, um keine Restbeträge auf Karten zu erzeugen und um Beträge von max. 200,00 DM mit zwei einzelnen 100,00 DM Karten zu realisieren.

Weitere Vorteile, Merkmale und Anwendungsmöglichkeiten der vorliegenden Erfindung zum Abwickeln von Zahlungstransaktionen in einem Datennetz ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. In der Zeichnung bedeutet:
- Fig. 1: ein Blockschaltbild eines Ausführungsbeispiels der Architektur einer Vorrichtung zur Durchführung des erfindungsgemäßen Verfahrens; und
- Fig. 2: den Ablauf eines Verbindungsaufbaus über das Internet zum Abwickeln einer Zahlungstransaktion nach dem erfindungsgemäßen Verfahren.

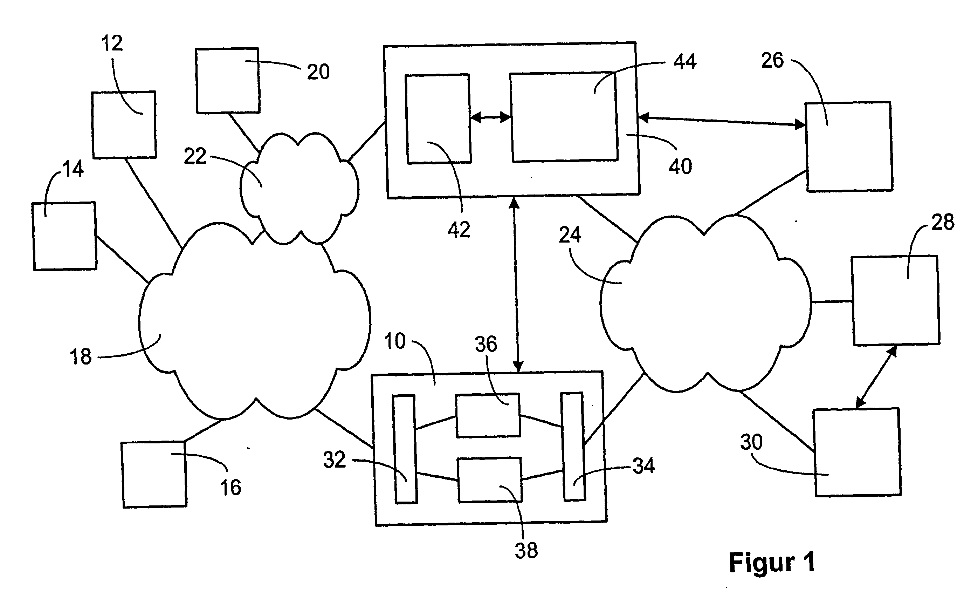

In Fig. 1 ist die Architektur einer Vorrichtung zur Durchführung des erfindungsgemäßen Verfahrens dargestellt.

Ein Verwaltungssystem 10 ist über das Internet 18 mit Kunden-Clients 12 und 16 sowie mit einem Händler-Server 14 verbunden.

Das Verwaltungssystem 10 ist ferner über ein Intranet 24 mit einer Calling-Card-Dienstzentrale 26, einem Abrechungssystem 28 und einem Finanzsystem 30 sowie einem Telefonie-System 40 verbunden.

Das Verwaltungssystem 10 ist gegenüber dem Internet 18 und dem Intranet 24 mittels Firewalls 32 bzw. 34 gesichert. Ferner weist es einen ersten und zweiten Applikations-Server 36 bzw. 38 auf, die beide redundant arbeiten. Hierdurch wird eine Sicherheit vor Ausfällen des und elektronischen Angriffen auf das Verwaltungssystem(s) erzielt.

Verbindungen zwischen Kunden-Clients 12 und 16 und dem Händler-Server 14 mit dem Verwaltungssystem 10 erfolgen über das HTTPS-Protokoll, also verschlüsselt.

Das Verwaltungssystem 10 kann ferner mittels Remote Method Invocation (RMI) mit dem Telefonie-System 40 kommunizieren.

Das Telefonie-System 40 ist über ein Telekommunikationsnetz 22 mit Telekommunikationsendgeräten wie dem dargestellten Telefon 20 verbunden. Es dient zur Abrechnung von Telefonaten mittels einer Prepaid-Calling-Card, d.h. es bietet einen Prepaid-Zugang zum PSTN (Public Switched Telephony Network). Hierzu weist es einen Switch 42 zum Schalten von Verbindungen in das PSTN und einen Datenbankrechner 44 auf, der Zugangskodes von Prepaid-Calling-Card überprüft und die Tarifabrechnung vornimmt. Das Telefonie-System ist ferner mit der Calling-Card-Dienstzentrale 26 über eine HTTPS-Verbindung konnektiert.

Die nachfolgenden Erläuterungen/Betrachtungen beziehen sich nur auf die Bezahlfunktion für das Internet, die Nutzungsmöglichkeit zur Telefonie ist hier nicht beschrieben. Im folgenden wird die Abwicklung einer Zahlungstransaktion gemäß der Erfindung über das Internet 18 als Datennetz beschrieben. Wenn im folgenden Käufer bzw. Kunde die Rede ist, wird darunter ein Kunden-Client 12, 16 verstanden, also ein Computer, der als Client im Datennetz agiert. Auf dem Kunden-Client 12, 16 wird ein Programm ausgeführt, das es einem Kunden ermöglicht, Waren und/oder Dienstleistungen über das Internet 18 von einem Händler-Server 14 einzukaufen.

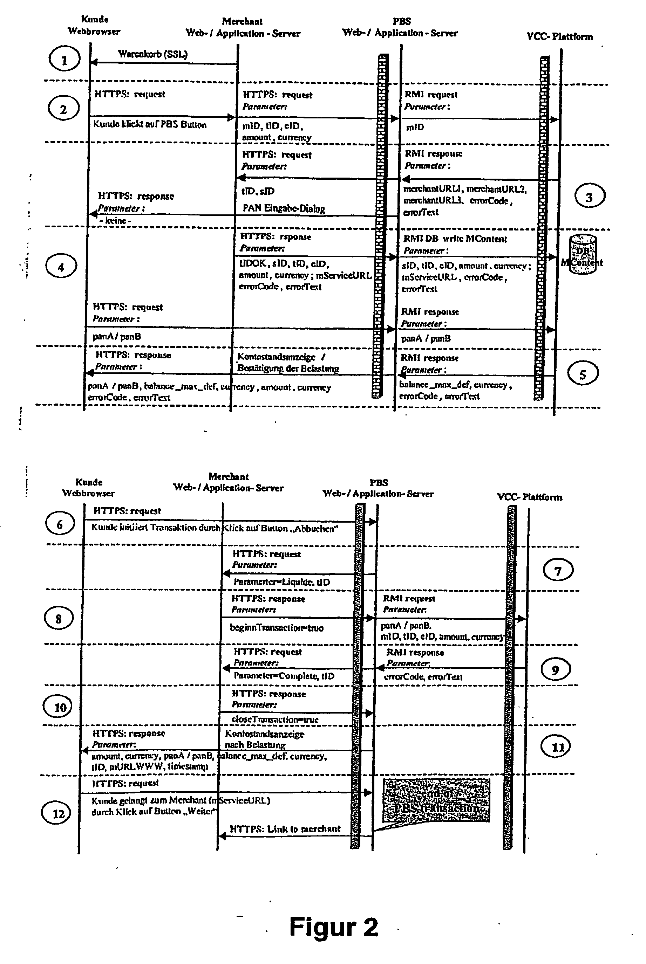

Der Käufer füllt sich hierzu einen Warenkorb bei einem Händler, der zur Bezahlung einen Link zum Verwaltungssystem 10 zur Verfügung stellt. Genauer gesagt befindet sich der Käufer auf der Internet-Seite des Händlers und wählt Waren und/oder Dienstleistungen zum Kauf aus, wodurch diese in den "virtuellen" Warenkorb gelegt werden. Der Käufer ruft nach Auswahl der Waren und/oder Dienstleistungen den Link zum Bezahlen auf, z.B. durch einen Klick auf ein entsprechendes Icon. Zum Nachvollziehen der dabei ablaufenden Signalisierungen über das Internet wird auf das Sequenzdiagramm in Fig. 2 verwiesen.

Über eine "demilitarisierte" Zone, dem Verwaltungssystem 10 ist das Internet 18 mit dem firmeninternen Netz, dem Intranet 24 verbunden. Unter "demilitarisierte" Zone wird insbesondere eine besonders gesicherte Zone verstanden, beispielsweise durch Firewalls 32, 34.

Im Verwaltungssystem 10 erfolgt eine Prüfung, ob der Händler das Verwaltungssystem 10 zur Abwicklung überhaupt nutzen darf. Besteht eine vertragliche Regelung zwischen Händler und dem Betreiber des Verwaltungssystems 10, dann wird dem Käufer die Möglichkeit geboten, den Bezahlprozess durchzuführen.

Dieser Bezahlprozess führt zu einer Reduzierung des Nummernkontos des Käufers. Das Nummernkonto wird vom Verwaltungssystem 10 verwaltet. Das Nummernkonto kann eindeutig anhand des Zugangskodes, der beispielsweise 15-stellig, numerisch und auf der Karte aufgebracht ist, die Internet-PAN (Primery Acount Number, 16-stellig, alphanumerisch) und der Telefonie-PAN (12-stellig, numerisch) identifiziert werden.

Aus Redundanzgründen sind in der "demilitarisierten" Zone zwei Applikations-Server 36, 38 aufgebaut, welche die mit den Zahlungstransaktionen verbundenen Bezahlsequenzen zwischen den Parteien (Käufer, Händler, Betreiber des Verwaltungssystems) abwickeln. Auf dieser Hardware ist als Software jeweils ein Web-Server und installiert. Er dient der Kommunikation mit dem Käufern und Händlern. Zusätzlich ist auf dem Applikations-Server 36, 38 Anwendungssoftware, insbesondere eine Datenbankapplikation, lokalisiert.

Die einzelnen Transaktionsdaten der Bezahlvorgänge werden vom Verwaltungssystem 10 täglich gesammelt und in eine Datei übertragen. Diese Datei wird im Rahmen eines Transfers auf ein weiteres Rechnersystem 28, genauer gesagt an einen Server, übermittelt. Die Informationen werden dort gemäß der jeweiligen Händlerverträge aufbereitet und einmal im Monat an das Finanzsystem 30 übermittelt, das den erforderlichen Geldtransfer zum Händler organisiert.

Folgende Datensätze, enthalten die entscheidenden Informationen des Bezahlprozesses:
Händlerkennung
Information zu Transaktion
Information zur Ware und/oder Dienstleistung
Währungskennzeichen
Betrag
Zeitstempel

Der Händler erhält von dem Betreiber des Verwaltungssystems 10 einen eindeutigen Kennzeichner - die Händlerkennung (im folgenden auch kurz als merchant-ID bezeichnet). Ohne diese Information, die beim Vertragsabschluß an den Händler gegeben wird, besteht für keinen Händler die Möglichkeit das erfindungsgemäße Verfahren zu nutzen.

Über die Web-Seite des Verwaltungssystems 10 wird dem Käufer die Möglichkeit geboten, die von ihm selbst initiierten Bezahl- und Telefonie-Transaktionen zu überwachen. Hier erfolgt in Form einer Einzelverbindungsübersicht, nach Datum geordnet, die Darstellung der Transaktionen. Um zu gewährleisten, dass auch nur der Kontoinhaber auf diese Informationen zugreifen kann, muss vom Kontoinhaber die Internet-PAN sowie die letzten 5 Ziffern des Zugangskodes seines Nummernkontos zwecks Authentifizierung beim Verwaltungssystem 10 eingegeben werden.

Im Rahmen der Nummern-Kontostandsanzeige verfügt der Käufer über die Möglichkeit, die von Ihm durchgeführten Transaktionen jederzeit anzuschauen. Es werden sowohl Bezahlprozesse wie auch die Telefonaktivitäten unter Wahrung der Datenschutzbestimmungen abgebildet. Diese Funktion bietet dem Käufer die Möglichkeit die von ihm durchgeführten Aktionen zu dokumentieren.

Am Ende des virtuellen Einkaufbummels steht ein mehr oder weniger gefüllter Warenkorb, der dem Käufer bzw. Kunden im Web-Browser angezeigt wird (Punkt 1 in Fig. 2).

Der Bezahlprozess kann durch Buttons, Icons, Bilder oder Links ausgelöst werden. Beim Mausklick auf den Bezahl-Button wird eine Verbindung zum Verwaltungssystem 10, genauer gesagt dem Applikations-Server 36, 38 hergestellt (Punkt 2 in Fig. 2).

Hinter dem Bezahl-Button verbirgt sich folgendes HTML-Formular:

```
  <form method="POST" action =
" https://applicationServer.telekom.de/payByPBS.jsp"
  >

  <p align="right">
   <input type="hidden" name="mID" value=mID">
   <input type="hidden" name="tID" value=tID">
   <input type="hidden" name="cID" value="abc">
   <input type="hidden" name="amount" value="55,00">
   <input type="hidden" name=currency" value="DEM">
   <input type="submit" name="bPBS" value="Pay by
 PBS">
 </form>
```

Hier werden die "versteckten" Parameter an den Web- bzw. Applications-Server 36, 38 im Verwaltungssystem 10 über eine SSL-Session übertragen:
1. mID = ID des Händlers
2. tID = Transaktions-ID, also die Rechnungsnummer des Vorganges
3. cID = Warenart
4. amount = Gesamtpreis
5. currency = Währungskennzeichen

Das Verwaltungssystem 10 unterstützt sowohl GET- als auch POST-Requests. Der Ursprung des Request muss von einem Web-Server 14 kommen. Um das festzustellen wird als erstes der Header ausgewertet und nach dem Headerfeld "Referer" gesucht.

Im Falle einer fingierten Anfrage, die z.B. über die Adresszeile eines Browsers ausgelöst wird, existiert der Header nicht. Das Verwaltungssystem 10 reagiert darauf mit einer Abbruch-Meldung.

Wird der Vorgang verlassen, wird die Session beendet und der Kunde auf die Homepage des Betreibers des Verwaltungssystems 10 weitergeleitet.

Für jede Initiierung einer Abrechnungs-Transaktion wird vom Applikationsserver eine interne, eindeutige sessionID (sID) erzeugt. Diese sID dient der Identifikation jeder einzelnen Zahlungstransaktion. Da nicht auszuschließen ist, dass der Browser des Kunden keine Cookies akzeptiert, wird die Identifikation einer jeder Zahlungstransaktion durch URL-Rewriting gesichert.

Anschließend wird geprüft, ob abrechnungsrelevante Daten vollständig übermittelt wurden. D.h. wurden für die Variablen mID, tID, cID, amount und currency auch tatsächlich entsprechende Werte übertragen? Die folgende Tabelle zeigt den Inhalt von der Anforderung merchantID-Request (Punkt 2 in Fig. 2):

| merchantID-Req | Punkt 2 in Fig. 2 |
|---|---|
| Feld | Bemerkungen |
| MID | String[301 ID des Händlers, wird vergeben sobald |
| | sich der Händler registrieren läßt. Die ID wird durch Zufallsgenerator vergeben. |

Die folgende Tabelle zeigt den Inhalt der Antwort merchantID-Response (Punkt 3 in Fig. 2):

| MerchantID-Res | Punkt 3 in Fig. 2 |
|---|---|
| Feld | Bemerkungen |
| MERCHANT-URL-1 | VARCHAR[256] URL für Request an Hädnler-Server (Händler) ob transactionID vorhanden. |
| MERCHANT-URL.2 | VARCHAR[256] |
| MERCHANT URL 3 | VARCHAR[2561 |
| Errorcode | Int Mögliche Errorcodes: -1001 -1002 -1005,-1006,-9999 |
| Errortext | String[125] |

Wenn ja, wird anhand einer Datenbank folgendes geprüft: Gibt es den Händler mit der übermittelten merchantID wirklich? Die mID gilt als gültig, wenn das Verwaltungssystem 10 den Errorcode = 0 liefert. D.h. ist der Errorcode ungleich 0, handelt es sich um einen ungültigen bzw. "falschen" Händler. Je nach aufgetretenem Errorcode werden entsprechende Fehlermeldungen ausgegeben, z.B.:
Der Transaktions-Datensatz ist unvollständig
Bitte aktualisieren Sie Ihren Warenkorb!
Schließen Sie dazu den Dialog und klicken Sie erneut auf den Bezahl-Button.

Nachdem die relevanten Daten übertragen wurden, müssen sie auf Authentizität geprüft werden Hierbei wird eine 128 Bit starke SSL-Verbindung zum Händler-Server 14 aufgebaut. Diese, wie später alle anderen noch folgenden Abfragen beim (Verbinden zum) Händler-Server 14, verwenden ebenfalls die starke SSL Verschlüsselung.

Dem Händler-Server 14 wird folgende Anfrage übermittelt: Gibt es bei dem Händler mit aktueller mID einen Vorgang mit dieser tID ? Gegen den Händler-Server 14 wird mittels der zuvor ermittelten merchantURL geprüft.

Die Anfrage an den Händler-Server 14 wird vom Verwaltungssystem 10 über ein Java-Servlet angestoßen. Auf die Antwort des Händler-Servers 14 wird nicht gewartet. Der Content wird über die sID gehalten. Das Java-Servlet erhält vom Händler-Server 14 als Antwort ein HTML-Formular. Neben den Daten zum Warenkorb wird auch ein Flag vom Typ boolean übertragen. Der Wert true bzw. false steht für eine gültige bzw. ungültige tID.

Das Ergebnis der Überprüfung wird von der Anwendung in eine Tabelle geschrieben. Diese Tabelle ist Teil der Händler-Datenbank. Die Daten werden also nicht auf dem Web-Server in dem Verwaltungssystem 10 gehalten. Der Primärschlüssel für den Lesezugriff ist die sID.

Die folgende Tabelle zeigt den Inhalt der Antwort transactionID-Response (Punkt 3 in Fig. 2):

| TransactionID-Res | Punkt3 in Fig. 2 |
|---|---|
| Feld | Bemerkungen |
| mID | String [30] Alphanumerische ID |
| sID | String[30] Alphanumerisrhe ID |
| tID | String [50] Alphanumerische ID |
| ciD | String[5] Alphanumerische ID |
| amount | String[8] Alphanumerisch |
| currency | String[3] Alphanumerisch |
| mServiceURL | String[2561 Alphanumerisch |
| errorcode | Int |
| errortext | String[125] Alphanumerisch |

Parallel zur obigen Anfrage wird ein Eingabedialog an den Web-Browser des Kunden gesendet. Die Zeit, die der Kunde benötigt, um die 16-stellige, alphanumerische PAN einzugeben und seine Eingabe mit dem OK-Button zu bestätigen, steht dem Händler-Server 14 zur Verfügung, um auf die Anfrage des Verwaltungssystems zu antworten. Für den Fall, dass der Kunde früher mit der Eingabe der PAN fertig ist, als das Verwaltungssystem 10 die Antwort vom Händler-Server 14 erhält, wird dem Kunden folgender Hinweis eingeblendet:
Ihre Transaktions-Daten werden momentan überprüft! Bitte haben Sie einen Augenblick Geduld.

Ist der Händler-Server 14 nicht zu erreichen, bzw. bekommt das Java-Servlet keine Antwort (timeout), wird dies durch einen entsprechenden errorcode oder errortext signalisiert. Auch hier wird die entsprechende Fehlermeldung an den Kunden weitergereicht, d.h. auf dem Kunden-Client angezeigt. In diesem Fehlerfall wird folgende Fehlermeldung ausgegeben:
Der Händler ist zur Zeit nicht zu erreichen! Bitte versuchen Sie es später noch einmal! Schließen Sie dazu den Dialog und klicken Sie erneut auf den Bezahl-Button.

Nach betätigen des OK-Buttons nach Eingabe der PAN wird der Vorgang synchronisiert. Dazu wird zunächst der Warenkorb, der über den Browser des Kunden an das Verwaltungssystem 10 übertragen wurde, mit der Antwort des Händler-Servers 14 (Datensatz der Tabelle) auf Gleichheit überprüft.

Bei verschiedenen Warenkörben wird folgende Fehlermeldung ausgegeben:
Der Warenkorb ist ungültig.
Bitte aktualisieren Sie Ihren Warenkorb!
Schließen Sie dazu den Dialog und klicken Sie erneut auf den Bezahl-Button.

Wird die Sitzung über den Beenden-Button verlassen, erhält die Sitzung den Status ungültig. Der Kunde wird daraufhin auf die aufrufende Seite des Händler-Servers 14 verwiesen.

Bei identischen Warenkörben kann nun mit der Überprüfung der PAN begonnen werden. Hierbei wird die Eingabe des Kunden - bereits auf den Applikations-Server - auf korrekte Länge geprüft. Im Fehlerfall wird dieselbe Meldung ausgegeben, die auch bei der Prüfung gegen die Nummernkonto-Datenbank geliefert wird:
Nur wenn die PAN 16 Stellen lang ist, wird sie gegen die Nummernkonto-Datenbank geprüft!

Existiert die PAN nicht, wird folgende Fehlermeldung ausgegeben (PAN beispielhaft angegeben):
PAN nicht gefunden!
Sie haben folgende, ungültige PAN eingegeben: 1234 5678 90ab CdeF

Ist die PAN gültig, die transactionID jedoch ungültig, wird die folgende transactionID-Fehlermeldung ausgeben:
Der Warenkorb ist ungültig. Bitte aktualisieren Sie
Ihren Warenkorb! Schließen Sie dazu den Dialog und klicken Sie erneut auf den Bezahl-Button.

Ist die PAN und transactionID ungültig, wird die folgenden transactionID-Fehlermeidung ausgeben:
Der Warenkorb ist ungültig. Bitte aktuatisieren Sie Ihren Warenkorb! Schließen Sie dazu den Dialog und klicken Sie erneut auf den Bezahl-Button.

Beide Ereignisse - die Anfrage an den Händler-Server 14 und die PAN-Eingabe des Kunden - müssen positive Ergebnisse liefern. Erst dann wird die PAN gegenüber dem Verwaltungssystem geprüft.

Die folgende Tabelle zeigt den Inhalt der Anforderung PAN-Request (Punkt 4 in Fig. 2):

| PAN-Reg | Punkt 4 in Fig. 2 |
|---|---|
| Feld | Bemerkungen |
| merchant_ID | String[30] Alphanumerische ID |
| transaction_ID | String [50] Alphanumerische ID |
| contend_ID | String [5] Alphanumerische ID |
| pan | String [16] Alphanumerische ID |

Die folgende Tabelle zeigt den Inhalt der Antwort PAN-Res (Punkt 4 in Fig. 2):

| PAN-Res | Punkt 4 in Fig. 2 |
|---|---|
| Feld | Bemerkungen |
| pan | String [16] |
| balance max def | String [7] |
| currency | String[3] (DEM) |
| timestamp | String[20] (tt.mm.yyyy hh:mm:ss) |
| errorcode | Int |
| errortext | Strinq[125] |

Die positive PAN-Prüfung liefert Daten, aus denen zusammen mit allen bisher gesicherten Daten eine Dialog-Maske erzeugt wird. In der Dialog-Maske kann der Kunde auf den Button "andere PAN" klicken - für den Fall, dass das Guthaben des Nummernkontos welches mit der ersten PAN verknüpft ist, für den Bezahlvorgang unzureichend ist. Dadurch gelangt er auf die PAN-Eingabe Maske. Wählt er hingegen den "Ja"-Button, initiiert der Kunde nur indirekt den Bezahlvorgang. Zunächst informiert das Verwaltungssystem 10 den Händler-Server 14, dass der Kunde liquide ist. Bereits zu diesem Zeitpunkt könnte der Händler den Kunden bedienen.

Als Rückantwort erhält das Verwaltungssystem 10 die in der folgenden Tabelle dargestellte Transaktions-Anforderung:

| Transaction-Reg Feld | Punkt 8 in Fig. 2 Bemerkungen |
|---|---|
| pan1 | String[16] Alphanumerische ID |
| pan2 | String[16] Alphanumerische ID |
| merchant_ID | String[30] Alphanumerische ID |
| transaction_ID | String [50] Alphanumerische ID |
| amount | String[7] |
| currency | String[3] (DEM) |

Das Verwaltungssystem 10 tätigt daraufhin die Abbuchung. Nach erfolgreicher Transaktion erhält der Händler-Server 14 sowie der Kunde eine Bestätigung der Abbuchung, die in der folgenden Tabelle aufgeschlüsselt ist:

| Transaction-Res to merchant | Punkt 9 in Fig. 2 |
|---|---|
| Feld | Bemerkungen |
| transactionID | String [501 Alphanumerische ID |
| amount | String[7] |
| currency | String[3] (DEM) |
| errorcode | Int |
| errortext | String[125] |

Abschließend bestätigt der Händler-Server 14 die Quittung, der Kunde beendet durch Schließen des Browserfensters den Vorgang (Punkt 10 in Fig. 2).

Die Erfindung zeichnet sich dadurch aus, dass eine einfache und anonyme Bezahlung über Datennetze wie dem Internet ermöglicht wird bei für einen Nutzer geringem technischen Aufwand.

### BEZUGSZEICHENLISTE

- 10: Verwaltungssystem
- 12: Käufer-Client
- 14: Händler-Server
- 16: Käufer-Client
- 18: Internet
- 20: Telefon
- 22: Telekommunikationsnetz
- 24: Intranet
- 26: Calling-Card-Dienstzentrale
- 28: Abrechnungssystem
- 30: Finanzsystem
- 32: Firewall
- 34: Firewall
- 36: erster Applikations-Server
- 38: zweiter Applikations-Server
- 40: Telefonie-System
- 42: Switch
- 44: Datenbankrechner

## Patentansprüche

1. Verfahren zum Abwickeln von Zahlungstransaktionen in einem Datennetz, mit einem Verwaltungssystem (10), das mindestens einen Datenbankserver mit mindestens einer Datenbank mit anonymen Nurnmernkonten, denen jeweils mindestens ein Zugangskode zugeordnet ist, und mindestens einer Datenbank mit Handlerinformationen aufweist, wobei bei einer Zahlungstransaktion
a) über einen Kunden-Client (12) eine Ware und/oder Dienstleistung auf einem Handler-Server (14) ausgewahlt wird,
b) der Kunden-Client (12) dem Verwaltungssystem (10) einen Transaktionsdatensatz übermittelt, der einen Zahlbetrag aufweist,
c) das Verwaltungssystem (10) mittels einer Authentifizierungsprozedur mit dem Kunden-Client (12) von einem Nummernkonto den Zahlbetrag abbucht,
d) wobei eine Zahlungstransaktion von einem Kunden-Client (12, 16) durch eine Eingabe gestartet wird, wodurch eine Verbindung zu einem Applikations-Server (36, 38) des Verwaltungssystems (10) aufgebaut wird,
e) sowie der Applikations-Server (36, 38) den Transaktionsdatensatz nach Empfang auf Vollständigkeit überprüft, indem er feststellt, ob alle Felder des Transaktionsdatensatzes Daten aufweisen,
**dadurch gekennzeichnet, dass**
f) der Transaktionsdatensatz einen Händler-Identitätskode aufweist und das Verwaltungssystem (10) nach Empfangen des Transaktionsdatensatzes prüft, ob der Händler-Identitätskode in der Datenbank mit Händlerinformationen gespeichert ist,
g) das Verwaltungssystem (10) eine Anfrage an den Händler-Server (14) zum Bestätigen der Zahlungstransaktion übermittelt, falls der Händler-Identitätskode in der Datenbank mit Händlerinformationen enthalten ist,
h) das Verwaltungssystem (10) nach Bestätigung der Anfrage durch den Händler-Server (14) mittels der Authentifizierungsprozedur mit dem Kunden-Client (12) von dem Nummernkonto den Zahlbetrag abbucht,
i) dass bei der Zahlungstransaktion von dem Applikations-Server (36, 38) eine eindeutige Kennung für die Zahlungstransaktion erzeugt sowie ein Transaktionsdatensatz auf dem Kunden-Client (12, 16) erzeugt und verschlüsselt an den Applikations-Server (36, 38) übertragen wird,
j) bei Vollständigkeit des Transaktionsdatensatzes die Authentizität der Daten überprüft wird, indem eine verschlüsselte Verbindung zum Händler-Server (14) aufgebaut und auf dem Applikations-Server (36, 38) ein Programm gestartet wird, weiches einen Prüfergebnisdatensatz vom Händler-Server (14) auswertet,
k) und dass eine zentrale Abwicklung von Zahlungstransaktionen über das Verwaltungssystem derart erfolgt, dass innerhalb eines vorgegebenen Zeitraums alle Zahlungstransaktionen vom Verwaltungssystem gespeichert und in einer Datei übertragen werden, wobei die Datei daraufhin an mindestens einen Server eines Abrechnungssystems übertragen wird.

2. Verfahren nach Anspruch 1, **dadurch gekennzeichnet, dass** die Authentifizierungsprozedur aus Schritt d) folgende Schritte umfasst:
1. auf dem Kunden-Client (12), Übermitteln einer Anfrage zur Eingabe eines Zugangskodes zum Nummernkonto an den Kunden-Client (12),
2. Übermitteln des Zugangskodes an das Verwaltungssystem (10),
3. Anzeigen des Kontostands des Nummernkontos vor und nach dem Abwickeln der Zahlungstransaktion
4. Bestätigen oder Abbrechen der Zahlungstransaktionen über den Kunden-Client (12) an das Verwaltungssystem (10).

3. Verfahren nach Anspruch 1 und 2, **dadurch gekennzeichnet, dass** der Transaktionsdatensatz mittels eines HTML-Formulars mit der GET- oder POST-Anforderung an den Applikations-Server (36, 38) übertragen wird.

4. Verfahren nach Anspruch 3, **dadurch gekennzeichnet, dass** der Applikations-Server (36, 38) die GET- oder POST-Anforderung auswertet, indem er überprüft, ob der übermittelte Transaktionsdatensatz einen Kopf und der Kopf ein bestimmtes Kopffeld aufweist.

5. Verfahren nach Anspruch 1, **dadurch gekennzeichnet, dass** das Programm vom Händler-Server (14) als Prüfergebnisdatensatz ein HTML-Formular erhält, das die dem Transaktionsdatensatz zugeordneten und auf dem Händler-Server (14) gespeicherten Daten und ferner einen logischen Wert für die Authentizität aufweist.

6. Verfahren nach Anspruch 5, **dadurch gekennzeichnet, dass** der Applikations-Server (36, 38) parallel zur Überprüfung der Authentizität eine Anfrage zur Eingabe des mindestens einen Zugangskodes zu einem Nummernkonto an den Kunden-Client (12, 16) sendet.

7. Verfahren nach Anspruch 6, **dadurch gekennzeichnet, dass** der Applikations-Server (36, 38) nach Erhalt des mindestens einen Zugangskodes und des Prüfergebnisdatensatzes den vom Kunden-Client (12, 16) empfangenen Transaktionsdatensatz mit dem Prüfergebnisdatensatz vergleicht und bei Gleichheit der Daten den mindestens einen Zugangskode anhand der mindestens einen Datenbank mit Nummernkonten überprüft.

8. Verfahren nach einem der vorhergehenden Ansprüche, **dadurch gekennzeichnet, dass** das Abrechnungssystem (28) die in der empfangenen Datei enthaltenen Zahlungstransaktionen aufbereitet und an mindestens einen Server eines Finanzsystems (30) überträgt und das Finanzsystem (30) Zahlungen auf Konten von Händler gemäß den aufbereiteten Zahlungstransaktionen veranlasst.

9. Verfahren nach einem der vorangehenden Ansprüche, **dadurch gekennzeichnet, dass** die Abfrage des Kontostands eines Nummernkontos über einen Client (12, 16) erfolgt, indem eine Anfrage an das Verwaltungssystem (10) zum Anzeigen des Kontostands übermittelt wird und das Verwaltungssystem (10) nach Eingabe des Zugangskodes zum Nummernkonto den Kontostand auf dem Client (12, 16) anzeigt.

10. Vorrichtung mit einer Architektur angepasst zur Durchführung eines Verfahrens nach einem der vorangehenden Ansprüche, mit einem Verwaltungssystem (10) zur zentralen Abwicklung der Zahlungstransaktionen, das mindestens einen Datenbank-Server mit mindestens einer Datenbank mit den anonymen Nummernkonten, denen jeweils mindestens ein Zugangskode zugeordnet ist, mindestens einer Datenbank mit den Händlerinformationen und mindestens einen Applikations-Server (36, 38) angepasst zum Abwickeln der Zahlungstransaktionen gemäß dem Verfahren nach einem der vorangehenden Ansprüche aufweist, wobei die Architektur ein Abrechnungssystem zum Empfangen der Datei des Verwaltungssystems (10) aufweist.

11. Vorrichtung nach Anspruch 10, **dadurch gekennzeichnet, dass** genau zwei Applikations-Server (36, 38) vorgesehen sind, die redundant arbeiten.

12. Vorrichtung nach Anspruch 10 oder 11, **dadurch gekennzeichnet, dass** der mindestens eine Applikations-Server (36, 38) über mindestens eine Firewall (32, 34) mit dem Datennetz, insbesondere dem Internet (18), verbunden ist.

13. Vorrichtung nach einem der vorangehenden Ansprüche, **dadurch gekennzeichnet, dass** das Abrechnungssystem (28) mit mindestens einem Server eines Finanzsystems (30) zum Veranlassen von Zahlungen gemäß aufbereiteten Zahlungstransaktionen verbunden ist.

14. Vorrichtung nach Anspruch 12 oder 13, **dadurch gekennzeichnet, dass** das Verwaltungssystem (10) und/oder Abrechnungssystem (28) und/oder Finanzsystem (30) über ein Intranet (24) miteinander verbunden sind.

15. Vorrichtung nach einem der Ansprüche 12 - 14, **dadurch gekennzeichnet, dass** das Verwaltungssystem (10) und/oder Abrechnungssystem (28) und/oder Finanzsystem (30) räumlich nahe beieinander angeordnet sind, insbesondere in einem Gebäude untergebracht sind.

16. Vorrichtung nach einem der Ansprüche 10 - 15, **dadurch gekennzeichnet, dass** das Verwaltungssystem (10) mit einem Telefonie-System (40) für vorbezahlte Telefonate verbunden ist.

## Claims

1. Method for executing payment transactions in a data network, having a management system (10) that has at least one database server with at least one database with anonymous numbered accounts, each provided with at least one access code, and that has at least one database with merchant information, wherein during a payment transaction,
a) a product and/or service is selected on a merchant server (14) through a customer client (12),
b) the customer client (12) transmits to the management system (10) a transaction data record that contains a payment amount,
c) the management system (10) debits the payment amount from a numbered account by means of an authentication procedure with the customer client (12),
d) wherein a payment transaction is initiated by a customer client (12, 16) through an input, by means of which a connection is established to an application server (36, 38) of the management system (10),
e) and the application server (36, 38) checks the transaction data record for completeness upon receipt by determining whether all fields of the transaction data record contain data,
**characterized in that**
f) the transaction data record has a merchant identity code and, after receiving the transaction data record, the management system (10) checks whether the merchant identity code is stored in the database with merchant information,
g) the management system (10) transmits a query to the merchant server (14) to confirm the payment transaction in the event that the merchant identity code is contained in the database with merchant information,
h) after confirmation of the query by the merchant server (14), the management system (10) debits the payment amount from the numbered account by means of the authentication procedure with the customer client (12),
i) **in that** during the payment transaction, a unique identifier for the payment transaction is generated by the application server (36, 38), and a transaction data record is generated on the customer client (12, 16) and is transmitted encrypted to the application server (36, 38),
j) in the event that the transaction data record is complete, the authenticity of the data is verified **in that** an encrypted connection is established to the merchant server (14) and a program is started on the application server (36, 38) that analyzes a check result data record from the merchant server (14),
k) and **in that** a central execution of payment transactions through the management system is accomplished in such a manner that all payment transactions are stored within a specified period by the management system and transmitted to a file, with the file thereupon being transmitted to at least one server of an accounting system.

2. Method according to claim 1, **characterized in that** the authentication procedure from step d) comprises the following steps:
1. on the customer client (12), transmission of a query to the customer client (12) for input of an access code for the numbered account,
2. transmission of the access code to the management system (10),
3. display of the account balance of the numbered account before and after the execution of the payment transaction,
4. confirmation or termination of the payment transactions through the customer client (12) to the management system (10).

3. Method according to claims 1 and 2, **characterized in that** the transaction data record is transmitted to the application server (36, 38) by means of an HTML form with the GET or POST request.

4. Method according to claim 3, **characterized in that** the application server (36, 38) evaluates the GET or POST request **in that** it checks whether the transmitted transaction data record has a header and the header has a specific header field.

5. Method according to claim 1, **characterized in that** the program receives as the check result data record from the merchant server (14) an HTML form that has the data associated with the transaction data record and stored on the merchant server (14) and also has a logical value for the authenticity.

6. Method according to claim 5, **characterized in that** the application server (36, 38), in parallel with the checking of authenticity, transmits to the customer client (12, 16) a query for input of the at least one access code for a numbered account.

7. Method according to claim 6, **characterized in that,** after receiving the at least one access code and the check result data record, the application server (36, 38) compares the transaction data record received from the customer client (12, 16) with the check result data record and, in the event that the data match, checks the at least one access code using the at least one database with numbered accounts.

8. Method according to any one of the preceding claims, **characterized in that** the accounting system (28) processes the payment transactions contained in the received file and transmits them to at least one server of a finance system (30), and the finance system (30) initiates payments to merchant accounts in accordance with the processed payment transactions.

9. Method according to any one of the preceding claims, **characterized in that** the query of the account balance of a numbered account takes place through a client (12, 16) **in that** a query to display the account balance is transmitted to the management system (10), and the management system (10) displays the account balance on the client (12, 16) after input of the access code for the numbered account.

10. Apparatus with an architecture adapted for carrying out a method according to any one of the preceding claims, having a management system (10) for central execution of the payment transactions, that has at least one database server with at least one database with the anonymous numbered accounts, each provided with at least one access code, and that has at least one database with the merchant information, and at least one application server (36, 38) adapted for executing the payment transactions in accordance with the method according to one of the preceding claims, wherein the architecture has an accounting system for receiving the file from the management system (10).

11. Apparatus according to claim 10, **characterized in that** exactly two application servers (36, 38) are provided that operate redundantly.

12. Apparatus according to claim 10 or 11, **characterized in that** the at least one application server (36, 38) is connected to the data network, in particular the Internet (18), through at least one firewall (32, 34).

13. Apparatus according to any one of the preceding claims, **characterized in that** the accounting system (28) is connected to at least one server of a finance system (30) for initiating payments in accordance with processed payment transactions.

14. Apparatus according to claim 12 or 13, **characterized in that** the management system (10) and/or the accounting system (28) and/or the finance system (30) are connected to one another through an intranet (24).

15. Apparatus according to any one of claims 12 - 14, **characterized in that** the management system (10) and/or the accounting system (28) and/or the finance system (30) are arranged in spatial proximity to one another, in particular in one building.

16. Apparatus according to any one of claims 10 - 15, **characterized in that** the management system (10) is connected to a telephony system (40) for prepaid telephone calls.

## Revendications

1. Procédé de réalisation de transactions de paiement dans un réseau informatique, comprenant un système de gestion (10) comportant au moins un serveur de base de données dotée d'au moins une base de données contenant des comptes numérotés anonymes à chacun desquels est affecté au moins un code d'accès, et au moins une base de données contenant des informations de vendeurs, une transaction de paiement comprenant:
a) la sélection d'une marchandise et/ou d'un service sur un serveur de vendeurs (14) par l'intermédiaire d'un client (12) de l'acheteur,
b) la transmission au système de gestion (10) par le client (12) d'un ensemble de données de transaction comportant un montant à payer,
c) le débit par le système de gestion (10) du montant à payer d'un compte numéroté moyennant une procédure d'authentification avec le client (12),
d) une transaction de paiement étant déclenchée par un client (12, 16) moyennant une saisie ce qui entraîne l'établissement d'une liaison vers un serveur d'application (36, 38) du système de gestion (10),
e) et le serveur d'application (36, 38) s'assurant, après réception, que l'ensemble de données de transaction est complet en vérifiant si tous les champs de l'ensemble de données de transaction comportent des données,
**caractérisé**
f) **en ce que** l'ensemble de données de transaction comporte un code d'identité de vendeur et en ce que le système de gestion (10) vérifie, après réception de l'ensemble de données de transaction si le code d'identité de vendeur est enregistré avec des informations de vendeurs dans la base de données,
g) **en ce que** le système de gestion (10) envoie une demande de confirmation de la transaction de paiement au serveur de vendeurs (14), dans le cas où le code d'identité de vendeur est contenu dans la base de données avec des informations de vendeurs,
h) **en ce que** le système de gestion (10), après confirmation de la demande par le serveur de vendeurs (14), débite le montant à payer du compte numéroté au moyen de la procédure d'authentification avec le client (12),
i) **en ce que**, lors de la transaction de paiement, un identifiant univoque pour la transaction de paiement est généré par le serveur d'application (36, 38) et un ensemble de données de transaction est généré sur le client (12, 16) et transmis de manière codée au serveur d'application (36, 38),
j) **en ce que**, si l'ensemble de données de transaction est complet, l'authenticité des données est vérifiée moyennant l'établissement d'une liaison codée vers le serveur de vendeurs (14) et le lancement, sur le serveur d'application (36, 38), d'un programme qui analyse un ensemble de données de résultat de vérification du serveur de vendeurs (14),
k) et **en ce qu'**une gestion centralisée de transactions de paiement s'effectue par l'intermédiaire du système de gestion de manière qu'en l'espace d'une période prédéterminée, toutes les transactions de paiement sont enregistrées par le système de gestion et transmises dans un fichier, les données étant ensuite transmises à au moins un serveur d'un système de décompte.

2. Procédé selon la revendication 1, **caractérisé en ce que** la procédure d'authentification de l'étape d) comprend les étapes suivantes :
1. sur le client (12), transmission au client (12) d'une demande de saisie d'un code d'accès au compte numéroté,
2. transmission du code d'accès au système de gestion (10),
3. affichage du solde du compte numéroté avant et après la réalisation de la transaction de paiement,
4. confirmation ou abandon des transactions de paiement via le client (12) au système de gestion (10).

3. Procédé selon la revendication 1 et 2, **caractérisé en ce que** l'ensemble de données de transaction est transmis au serveur d'application (36, 38) au moyen d'un formulaire HTML avec la requête GET ou POST.

4. Procédé selon la revendication 3, **caractérisé en ce que** le serveur d'application (36, 38) analyse la requête GET ou POST en vérifiant si l'ensemble de données de transaction transmis comporte un en-tête et si l'en-tête comporte un champ d'en-tête donné.

5. Procédé selon la revendication 1, **caractérisé en ce que** le programme du serveur de vendeurs (14) reçoit, comme ensemble de données de résultat de vérification, un formulaire HTML qui comporte les données affectées à l'ensemble de données de transaction et enregistrées sur le serveur de vendeurs (14) ainsi qu'une valeur logique pour l'authenticité.

6. Procédé selon la revendication 5, **caractérisé en ce que,** parallèlement à la vérification de l'authenticité, le serveur d'application (36, 38) envoie au client (12, 16) une requête de saisie du au moins un code d'accès à un compte numéroté.

7. Procédé selon la revendication 6, **caractérisé en ce que** le serveur d'application (36, 38), après réception du au moins un code d'accès et de l'ensemble de données de résultat de vérification, compare l'ensemble de données de transaction reçu du client (12, 16) à l'ensemble de données de résultat de vérification et, si les données sont identiques, vérifie le au moins un code d'accès à l'aide de la au moins une base de données de comptes numérotés.

8. Procédé selon l'une des revendications précédentes, **caractérisé en ce que** le système de décompte (28) met en forme les transactions de paiement contenues dans le fichier reçu et les transmet à au moins un serveur d'un système financier (30), et **en ce que** le système financier (30) déclenche des paiements sur des comptes de vendeurs suivant les transactions de paiement mises en forme.

9. Procédé selon l'une des revendications précédentes, **caractérisé en ce que** la consultation du solde d'un compte numéroté s'effectue par l'intermédiaire d'un client (12, 16), une requête d'affichage du solde étant transmise au système de gestion (10), et le système de gestion (10) affichant, après saisie du code d'accès au compte numéroté, le solde sur le client (12, 16).

10. Dispositif ayant une architecture adaptée à la réalisation d'un procédé selon l'une des revendications précédentes, comprenant un système de gestion (10) pour la gestion centralisée des transactions de paiement qui comporte au moins un serveur de base de données doté d'au moins une base de données contenant les comptes numérotés anonymes à chacun desquels est affecté au moins un code d'accès, au moins une base de données contenant les informations de vendeur, et au moins un serveur d'application (36, 38) adapté à la réalisation de transactions de paiement suivant le procédé selon l'une des revendications précédentes, l'architecture comportant un système de décompte pour la réception du fichier du système de gestion (10).

11. Dispositif selon la revendication 10, **caractérisé en ce que** deux serveurs d'application (36, 38) précisément, fonctionnant de manière redondante, sont prévus.

12. Dispositif selon la revendication 10 ou 11, **caractérisé en ce que** le au moins un serveur d'application (36, 38) est relié au réseau informatique, notamment l'internet (18), par l'intermédiaire d'au moins un pare-feu (32, 34).

13. Dispositif selon l'une des revendications précédentes, **caractérisé en ce que** le système de décompte (28) est relié à au moins un serveur d'un système financier (30) pour le déclenchement de paiements suivant des transactions de paiement mises en forme.

14. Dispositif selon la revendication 12 ou 13, **caractérisé en ce que** le système de gestion (10) et/ou le système de décompte (28) et/ou le système financier (30) sont reliés entre eux par un intranet (24).

15. Dispositif selon l'une des revendications 12 à 14, **caractérisé en ce que** le système de gestion (10) et/ou le système de décompte (28) et/ou le système financier (30) sont disposés proches spatialement l'un de l'autre, notamment logés dans un bâtiment.

16. Dispositif selon l'une des revendications 10 à 15, **caractérisé en ce que** le système de gestion (10) est relié à un système de téléphonie (40) pour communications prépayées.
